# EUROPÄISCHE PATENTSCHRIFT

(11) **EP 0 695 794 B1**
(45) Veröffentlichungstag und Bekanntmachung des Hinweises auf die Patenterteilung: **30.08.2000**
(21) Anmeldenummer: 95111570.8
(22) Anmeldetag: 22.07.1995
(51) Int. Cl.: C09K 3/16, C09D 17/00, H01B 1/20, D01F 1/04

(54) **Pigmentkonzentrat und dessen Verwendung**
Pigment concentrate and its use
Concentré de pigment et son utilisation

(30) Priorität: 06.08.1994 DE 4427931
(43) Veröffentlichungstag der Anmeldung: 07.02.1996
(73) Patentinhaber: Goldschmidt AG, 45127 Essen (DE)
(72) Erfinder: Bergfried, Stefan, D-45131 Essen (DE); Sawitowski, Thomas, D-45130 Essen (DE); Silber, Stefan, Dr., D-47804 Krefeld (DE); Vallerien, Sven-Uwe, Dr., D-45239 Essen (DE)

(56) Entgegenhaltungen:
- EP-A- 0 063 699
- EP-A- 0 064 558
- EP-A- 0 070 983
- DE-A- 4 237 355
- GB-A- 2 005 697

## Beschreibung

Die Erfindung betrifft ein wäßriges Konzentrat eines elektrisch leitfähigen, ultrafeinen Pigments und dessen Verwendung zur antistatischen Ausrüstung von Kunststoffen, Folien, Synthesefasern und Laminatpapieren.

Zur Herstellung von antistatischen Beschichtungen werden elektrisch leitfähige Pigmente und Füllstoffe eingesetzt.

In der Literatur sind eine Vielzahl derartiger Stoffe beschrieben, als Beispiele sind die folgenden Patentschriften genannt: DE-A-43 03 385, EP-A-0 582 371, WO 92/01631, EP-A-0 459 552, EP-A-0 415 477 und EP-A-0 448 946.

Diese Pigmente unterscheiden sich in ihrer chemischen Zusammensetzung und auch in ihrer Morphologie, dabei spielen insbesondere Teilchengröße und -form eine wichtige Rolle. Voraussetzung zur Erlangung einer durchgängigen Oberflächenleitfähigkeit von mit solchen Pigmenten hergestellten Beschichtungen ist die Ausbildung von durchgängigen Leiterbahnen infolge der Berührung der Pigmentpartikel untereinander (Percolation). Die Ausbildung solcher elektrisch leitfähiger Pfade setzt bei einer Pigmentvolumenkonzentration (PVK) ein, bei der sich der elektrische Widerstand drastisch, oft um mehrere Größenordnungen, verringert. Man bezeichnet diese Schwellenkonzentration in der Literatur als die Percolations-PVK (z.B.: J. Composite Materials, 26, 2727 (1992)).

Es ist bekannt, daß sich die Percolations-PVK nichtwäßriger Beschichtungen erniedrigen läßt, wenn das Pigment zur kontrollierten Flockung gebracht wird, so daß netz- und bandartige Strukturen sich berührender Teilchen entstehen (Farbe + Lack, 100, 171 (1994)).

Es stellt sich nun das erfindungsgemäße Problem, bindemittelfreie, wäßrige Pigmentkompositionen, vorzugsweise in Pasten- oder Konzentratform, bereitzustellen.

Diese sollen universell einsetzbar sein in bezug auf Auflacken mit unterschiedlichen Bindemitteln, wie z.B. Polyvinylchlorid, Polyvinylacetat, Polyester, Polyacrylat, Polyurethan oder auch Copolymeren oder auch Mischungen derselben. Gleichzeitig sollen fließfähige Konzentrate mit hohem Pigmentgehalt hergestellt werden, deren weitere Verarbeitung problemlos ist. So sollte die Stabilität dieser Pasten hoch sein, ein Bindemittel- oder Verdünnungsschock vermieden werden, und insbesondere ohne zusätzliche Additivierung eine kontrollierte Flockulation erreicht werden, um eine ausreichend hohe elektrische Leitfähigkeit zu gewährleisten.

Typische Dispergieradditive für wäßrige Systeme sind oberflächenaktive, anionische, kationische oder nichtionische Substanzen, die niedermolekular sind. So ist bekannt, daß Natriumphoshat, Natriumsulfonat, Natriumoleat oder Natriumstearat zur Verbesserung der Dispergierbarkeit von elektrisch leitfähigem, dotiertem Zinn(IV)oxid verwendet werden (JP 162184180). Auch die Verwendung von Polyacrylaten mit niedrigem Molekulargewicht als Dispergiermittel für Pigmente in wäßrigen Beschichtungen ist bekannt. In der US-PS 3 980 602 sind Dispergieradditive beschrieben, die 5 bis 25 Gew.-% Acrylsäure oder Methacrylsäure in Polymeren enthalten, die aus Alkylacrylaten und Styrol oder bestimmten Alkylmethacrylaten gebildet worden sind.

Eine ausreichende Stabilisierung wäßriger Pigmentkonzentrate läßt sich nach diesem Stand der Technik jedoch nicht erreichen.

Überraschenderweise genügt ein wäßriges Pigmentkonzentrat den zuvor genannten Anforderungen, welches aus
- 40 - 60 %: eines elektrisch leitfähigen Pigments auf Metalloxidbasis mit einem spezifischen Pulverwiderstand von 0,3 bis 10⁶ Ohm x m und einer Teilchengröße von 10 nm bis 50 µm,
- 2 - 4,9 %: eines terpolymeren, anionischen Polyacrylats bestehend aus
35 - 45 % eines Alkyl(meth)acrylats mit 1 bis 3 Kohlenstoffatomen in der Alkylkette,
35 - 45 % eines Alkyl(meth)acrylates mit 4 bis 12 Kohlenstoffatomen in der Alkylkette und
10 - 30 % Acrylsäure oder Methacrylsäure
- 0,1 - 4,9 %: eines Amins, so daß ein pH-Wert von 7,0 bis 10,0 resultiert,
- 0,1 - 0,9 %: eines nichtionischen, grenzflächenaktiven Anlagerungsproduktes von Ethylenoxid an ein Alkylphenol, einen Alkohol oder an eine Carbonsäure,
- 0 - 2,0 %: eines Verdickers auf Polyacrylat-, Polyurethanbasis, oder auf Basis eines Cellulosederivates,
- 0 - 6,0 %: eines Glykolderivates, sowie
- 21,3 - 57,8 %: Wasser
besteht.

Als bevorzugtes elektrisch leitfähiges Pigment kommt beispielsweise mit Antimon und/oder Fluor dotiertes Zinn(IV)oxid in Frage, welches ggf. auf Trägerpigment (Rutil, Bariumsulfat, Glimmer, o.ä.) gecoatet ist.

Als Alkyl(meth)acrylat-Copolymere mit 1 bis 3 bzw. 4 bis 12 C-Atomen in der Alkylkette kommen insbesondere Methylmethacrylat, Ethylacrylat, bzw. Butylacrylat, Butylmethacrylat, Isodecylmethacrylat, und Stearylmethacrylat in Betracht.

Als Aminkomponente können eingesetzt werden: Ammoniak, Diethylethanolamin, Ethanolamin, Diethanolamin, Triethanolamin, Monoisopropanolamin, Triethylamin, Monoethanolamin, Aminomethylpropanol, Diethylamin, Morpholin, Dimethylethanolamin.

Als Glykolderivat eignet sich z.B. Butylglykol.

Die Herstellung des Pigmentkonzentrates erfolgt dabei in einem typischen Dispergierprozeß. Um die Pigmentagglomerate zu zerteilen, müssen Scherkräfte einwirken können. Dies kann in einer Vielzahl unterschiedlichster Maschinen erfolgen (Dissolver, Kugelmühlen, Sandmühlen u.a.), wobei die Übertragung der Scherenergie auf die Pigmentteilchen durch Zusatz von Additiven nur gering beeinflußt wird. Es ist allerdings wichtig, daß die neu geschaffenen Oberflächen rasch benetzt werden, um die Rückbildung von Agglomeraten zu verhindern.

Entscheidend ist nun, die durch die Dispergierung erreichte Feinverteilung der Pigmentteilchen in der Dispersion möglichst bis zum trockenen Film zu stabilisieren.

In wäßrigen Medien dominiert die Stabilisierung durch elektrische Ladungen, wenn die einzelnen Feststoffteilchen gleichnamig geladen vorliegen. Bei zunehmender Trocknung des Films spielen auch sterische Stabilisierungsterme eine Rolle.

Der Glykolzusatz bewirkt eine Verlangsamung der Trocknungsgeschwindigkeit und erhöht somit die Verarbeitungszeit und verbessert zudem den Verlauf. Der Verdicker wird zugesetzt, um die Viskosität der Pigmentpaste nach dem Mahlansatz zu erhöhen und ihr rheologisches Verhalten zu modifizieren.

Das erfindungsgemäße Pigmentkonzentrat eignet sich hervorragend zur antistatischen Ausrüstung von Kunststoffen, Folien, Synthesefasern und Laminatpapieren.

Die erfindungsgemäße Pigmentpaste besitzt eine überraschend hohe Stabilität. Dies bedingt mehrere bedeutsame technische Verbesserungen. So erlaubt die problemlose Verdünnbarkeit die gezielte Einstellung der für den jeweiligen Verarbeitungsprozeß geeigneten Viskosität. Ein technischer Maschinenauftrag unter konstanten Bedingungen ist so über einen längeren Zeitraum gewährleistet. Beispielsweise kann die Beschichtung durch einen Sprühvorgang oder in einem Tauchbad erfolgen. Infolge dieser erhöhten Stabilität sind auch längere Standzeiten und/oder Ausfallzeiten akzeptabel. Zur Herstellung dieser Beschichtung läßt sich das erfindungsgemäße Pigmentkonzentrat mit verschiedensten wasserbasierenden Bindemitteln, wie z.B. PVC, Polyvinylacetat, Polyester, Polyurethan, Polyacetat, oder auch Copolymeren und/oder Mischungen derselben ohne ein Bindemittel, auflacken. Ein weiterer technischer Vorteil besteht darin, daß bei o.g. Auflackvorgang zumeist kein zusätzlicher Entschäumer vonnöten ist. Entscheidend für die technische Verwendung der Beschichtung zur antistatischen Ausrüstung von Kunststoffen, Synthesefasern, Folien und Laminatpapieren ist, daß eine kontrollierte Flockulation während der Filmtrocknung ermöglicht wird, ohne daß zusätzliche Additive dem Beschichtungssystem zugesetzt werden müssen.

Die erfindungsgemäße Konzentrat-Formulierung und ihre Verwendung ist in den nachstehenden Beispielen näher erläutert.

Die Bestandteile der Formulierungen ergeben sich wie folgt:
1. Terpolymere:
   1. 45 % Butylmethacrylat, 30 % Methylmethacrylat und 25 % Acrylsäure
   2. 10 % Styrol, 70 % Methylmethacrylat und 20 % Acrylsäure (Vergleichssubstanz)
   3.45 % Butylmethacrylat, 45 % Methacrylat und 10 % Acrylsäure
   alle 50 %ig in Butylglykol.
2. Ethylenoxidanlagerungsprodukte:
   1. Ricinusethoxylat
   2. Sorbitmonolauratethoxylat
   3. Sorbithexanoleatethoxylat
3. Stickstoffverbindungen:
   1. Ammoniak
   2. Dimethylethanolamin
   3. 2-Amino-2-methyl-1-propanol
4. Verdicker:
   1. Polyacrylat
   2. Cellulose

Die in der Tabelle angegeben Typen beziehen sich auf die o.g. Aufstellung der Inhaltsstoffe, ihr Gewichtsanteil ist jeweils angegeben. Betrachtet wird die Absetzstabilität einer Verdünnung von 1 zu 20 des erfindungsgemäßen Pigments in VE-Wasser (vollentsalztes Wasser).

Das darin enthaltene elektrisch leitfähige, mit Fluor dotierte Zinn(IV)oxid hat eine mittlere Teilchengröße von 0,2 µm, die Oberkorngrenze liegt bei 2 µm. Der spezifische Pulverwiderstand beträgt 10 Ohm x m, die Schüttdichte liegt bei 0,35 g/ml. Die BET-Oberfläche hat einen Wert zwischen 50 bis 60 m²/g.

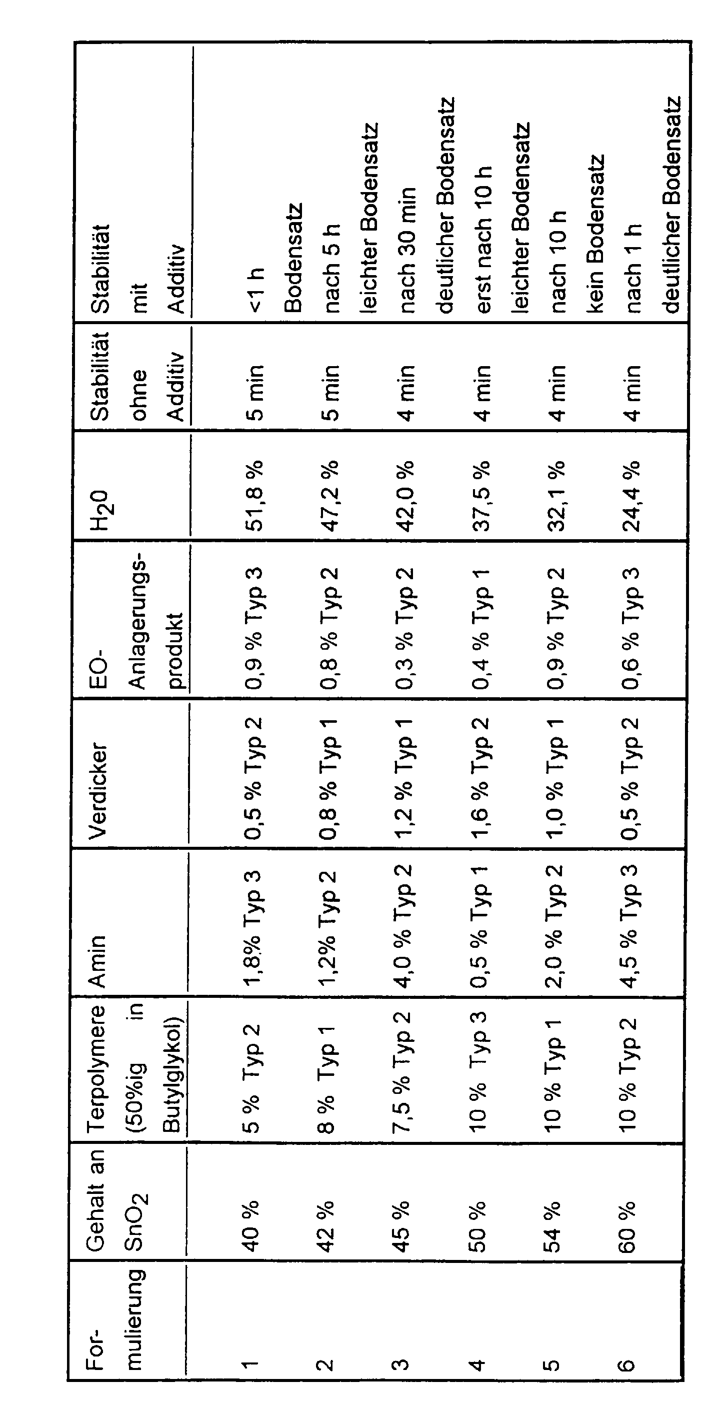

Die Tabelle zeigt, daß die Verdünnungsstabilität der erfindungsgemäßen Pigmentkonzentrate 2, 4 und 5 im Vergleich zu den Vergleichsbeispielen 1, 3 und 6 bedeutend erhöht ist.

## Patentansprüche

1. Pigmentkonzentrat, bestehend aus
40 - 60 % eines elektrisch leitfähigen Pigments auf Metalloxidbasis mit einem spezifischen Pulverwiderstand von 0,3 bis 10⁶ Ohm x m und einer Teilchengröße von 10 nm bis 50 µm,
2 - 4,9 % eines terpolymeren, anionischen Polyacrylats bestehend aus
35 - 45 % eines Alkyl(meth)acrylats mit 1 bis 3 Kohlenstoffatomen in der Alkylkette,
35 - 45 % eines Alkyl(meth)acrylates mit 4 bis 12 Kohlenstoffatomen in der Alkylkette und
10 - 30 % Acrylsäure oder Methacrylsäure
0,1 - 4,9 % eines Amins, so daß ein pH-Wert von 7,0 bis 10,0 resultiert,
0,1 - 0,9 % eines nichtionischen, grenzflächenaktiven Anlagerungsproduktes von Ethylenoxid an ein Alkylphenol, einen Alkohol oder an eine Carbonsäure,
0 - 2,0 % eines Verdickers auf Polyacrylat-, Polyurethanbasis, oder auf Basis eines Cellulosederivates,
0 - 6,0 % eines Glykolderivates, sowie
21,3 - 57,8 % Wasser.

2. Verwendung von Konzentraten gemäß Anspruch 1 zur antistatischen Ausrüstung von Kunststoffen, Folien, Synthesefasern und Laminatpapieren.

## Claims

1. Pigment concentrate comprising
40 - 60% of an electrically conductive pigment based on metal oxide having a specific powder resistance of from 0.3 to 10⁶ ohm × m and a particle size of from 10 nm to 50 µm,
2 - 4.9% of a terpolymeric anionic polyacrylate consisting of
35-45% of an alkyl (meth)acrylate with 1 to 3 carbon atoms in the alkyl chain,
35-45% of an alkyl (meth)acrylate with 4 to 12 carbon atoms in the alkyl chain and
10-30% of acrylic acid or methacrylic acid,
0.1 - 4.9% of an amine, so as to give a pH of from 7.0 to 10.0,
0.1 - 0.9% of a nonionic surface-active adduct of ethylene oxide with an alkylphenol, with an alcohol or with a carboxylic acid,
0 - 2.0% of a thickener based on polyacrylate, on polyurethane or on a cellulose derivative,
0 - 6.0% of a glycol derivative and
21.3 - 57.8% of water.

2. Use of a concentrate according to Claim 1 for the antistatic treatment of plastics, films, synthetic fibres and laminated papers.

## Revendications

1. Concentré de pigments, constitué de :
40-60% d'un pigment conducteur de l'électricité à base d'oxyde métallique avec une résistance spécifique de poudre de 0,3 à 10⁶ ohms·m et une taille particulaire de 10 nm à 50 µm;
2-4,9% d'un polyacrylate terpolymère anionique constitué de :
35-45% d'un (méth)acrylate d'alkyle avec 1 à 3 atomes de carbone dans la chaîne alkyle;
35-45% d'un (méth)acrylate d'alkyle avec 4 à 12 atomes de carbone dans la chaîne alkyle, et
10-30% d'acide acrylique ou d'acide méthacrylique;
0,1-4,9% d'une amine, de sorte qu'il en résulte un pH de 7,0 à 10,0;
0,1-0,9% d'un produit d'addition non ionique et surfactant d'oxyde d'éthylène sur un phénol d'alkyle, un alcool ou sur un acide carboxylique;
0-2,0% d'un épaississant à base de polyacrylate, de polyuréthanne ou à base d'un dérivé de cellulose;
0-6,0% d'un dérivé de glycol, ainsi que
21,3-57,8% d'eau.

2. Utilisation de concentrés suivant la revendication 1, comme apprêt antistatique de matières synthétiques, de feuilles, de fibres synthétiques et de papiers laminés.
